# EUROPEAN PATENT APPLICATION

(11) **EP 3 299 950 A1**
(43) Date of publication of application: **28.03.2018**
(21) Application number: 17187260.9
(22) Date of filing: 22.08.2017
(51) Int. Cl.: G06F 3/14, G09G 5/12

(54) **DISPLAY SCREEN GENERATING DEVICE, DISPLAY SCREEN GENERATING METHOD, AND DISPLAY SCREEN GENERATING PROGRAM**

(30) Priority: 27.09.2016 JP 2016187747
(71) Applicant: Omron Corporation, Kyoto-shi, Kyoto 600-8530 (JP)
(72) Inventor: KIYOTAKA, Ueda, Shimogyo-Ku, Kyoto-shi, Kyoto 600-8530 (JP); KAYOKO, Isogai, Shimogyo-Ku, Kyoto-shi, Kyoto 600-8530 (JP)
(74) Representative: Winter, Brandl, Fürniss, Hübner, Röss, Kaiser, Polte - Partnerschaft mbB

(57) **Abstract**

A display screen generating device allows a screen designer to recognize an actual time required to display a screen on an external device. A display screen generating device 50 includes a screen generator 11, a required display time database 20, and a required display time calculator 12. The screen generator 11 generates a screen to be displayed on an external device. The required display time database 20 stores required times per component. Each of the required times per component is the time required to display one of components used for the screen on the external device. The required display time calculator 12 calculates a required screen display time TD required to display the generated screen on the external device based on the required times per component.

## Description

### CROSS-REFERENCE TO RELATED APPLICATION

This application claims priority to Japanese Patent Application No. 2016-187747 filed on September 27, 2016, the entire disclosure of which is hereby incorporated by reference.

### BACKGROUND

The present invention relates to display screen generation of an external display device such as a programmable terminal used for a factory automation (FA) device.
At present, widely used FA systems are shown in, for example, Omron Control Device, Machine Automation Controller, Outline, Website: http://www.fa.omron.co.jp/guide/technicalguide/454/270/index.html. Such FA devices often include a high-function display such as a programmable terminal shown in Omron Control Device, Programmable terminal, Outline, Website: http://www.fa.omron.co.jp/guide/technicalguide/27/284/index.html, which displays information on a connected FA device, and operates the FA device as necessary.
An operator watches a screen such as a meter displayed on the programmable terminal to check the operating state of an FA device. The operator performs various operation control and settings of the FA device by touching, for example, buttons of the screen displayed on the programmable terminal.

A display screen of such a programmable terminal is often generated by the following method.

A designer of a display screen controls, for example, a personal computer (PC), into which a screen generating program is installed, to generate the display screen. The designer transfers the display screen generated with the PC to a programmable terminal. Accordingly, a desired display screen is included in the programmable terminal.

The designer performs debug operations utilizing a simulator performing the same operation or display as the programmable terminal on the PC.
Japanese Patent Publication No. H6-186940 shows a configuration of a programmable terminal. This programmable terminal actually displays a display screen obtained from the outside, and displays the time required for the display on the screen.

Components, that is, elements constituting a display screen usually include, for example, buttons, lamps, meters, and images. The times required to display these components are different from each other. A programmable terminal with a large screen or a high-definition programmable terminal is used to provide improved operability and visibility.

Thus, a designer of a display screen often generates a screen including a large number of components. The designer often uses highly operable high-function components to improve the operability of the programmable terminal. Such components typically require times to be displayed.

### SUMMARY

However, while generating a display screen, a designer does not know the time required to display the screen on a programmable terminal (i.e., the required display time (actual time) on the programmable terminal).
For example, the programmable terminal shown in Japanese Patent Publication No. H6-186940 needs to actually display a display screen to inform the designer of the required display time. That is, the designer does not know the required display time, while generating the display screen.

The type of the processor (e.g., a CPU or an MPU) embedded in a programmable terminal is not always identical to the type of the processor (e.g., a CPU) embedded in a PC.

If different types of processors are used in the PC and the programmable terminal, the time required to display a screen on the PC (i.e., the required display time (virtual time) on the PC) is different from the time required to display the screen on the programmable terminal (i.e., the required display time (actual time) on the programmable terminal) even utilizing simulation.

In general, the processor of a programmable terminal operates at a lower speed than that of a PC. Even if a display screen designer determines that there is no operability problem while debugging, an operator would notice that there is an operability problem while operating the programmable terminal. As a result, the designer needs to regenerate the display screen to improve the operability of the programmable terminal.

This problem occurs not only between a PC and a programmable terminal, but also between a display screen generating device and an external device different from the display screen generating device, where the devices operate at different speeds.
It is thus an objective of the present invention to provide a display screen generating device allowing a screen designer to recognize an actual time required to display a screen on an external device.

A display screen generating device according to the present invention includes a screen generator, a required display time database, and a required display time calculator. The screen generator generates a screen to be displayed on an external device. The required display time database stores required times per component. Each of the required times per component is the time required to display one of components used for the screen on the external device. The required display time calculator calculates a required screen display time required to display the generated screen on the external device based on the required times per component.

This configuration informs a screen designer of the time required to display the screen (i.e., the required screen display time) corresponding to the processing speed of the external device.

In the display screen generating device according to the present invention, the screen generator may add information on the required screen display time to the screen.

In this configuration, the required screen display time is visible to the screen designer who is generating the screen.
In the display screen generating device according to the present invention, the required display time calculator may output an alert to the screen generator upon detecting that the required screen display time is longer than or equal to a predetermined threshold time. The screen generator may add the alert to the screen.
In this configuration, the alert indicating a long required screen display time is visible to the screen designer who is generating the screen.
The display screen generating device according to the present invention may further include a display simulator configured to simulate display of the screen. The display simulator may output the screen after a standby time corresponding to the required screen display time.
In this configuration, the simulator displays the screen after the same period of time as the required display time of the programmable terminal, and allows the screen designer to perform operation or check a display change like the programmable terminal. Accordingly, the screen designer experiences the operability of the display screen.
The present invention allows a screen designer to recognize an actual time required to display a screen on an external device, which is different from a device generating the screen.

### BRIEF DESCRIPTION OF THE DRAWINGS

FIG. 1 is a block diagram illustrating a main configuration of a display screen generating device according to a first embodiment of the present invention.
FIG. 2 is a schematic block diagram of a system, to which the display screen generating device is applied.
FIG. 3 illustrates exemplary contents stored in a required display time DB.
FIG. 4A illustrates a schematic configuration of a display screen for screen generation.
FIG. 4B illustrates a first state of the screen generation.
FIG. 5A illustrates a second state of the screen generation.
FIG. 5B illustrates a third state of the screen generation.
FIG. 6 is a flow chart illustrating a display screen generating method according to the first embodiment of the present invention.
FIG. 7 is a flow chart illustrating a display screen generating method according to a second embodiment of the present invention.
FIG. 8A illustrates a first state of screen generation in the display screen generating method according to the second embodiment.
FIG. 8B illustrates a second state of the screen generation in the display screen generating method according to the second embodiment.
FIG. 9A illustrates a schematic configuration of a display screen for screen generation.
FIG. 9B illustrates a configuration of a group structure indication window.
FIG. 10 illustrates exemplary contents stored in a required display time DB according to a third embodiment.
FIG. 11 illustrates a schematic configuration of a toolbox window.
FIG. 12 is a block diagram illustrating a main configuration of a display screen generating device according to a fourth embodiment of the present invention.
FIG. 13 is a graph illustrating an exemplary file including a list of required screen display times TD per screen generated by a notifier.
FIG. 14 is a block diagram of a display screen generating device according to a fifth embodiment of the present invention.
FIG. 15 is a flow chart of checking a generated screen using a simulator according to the fifth embodiment.
FIGS. 16A and 16B illustrate how to display a screen on a display.

### DETAILED DESCRIPTION

A display screen generating device, a display screen generating method, and a display screen generating program according to a first embodiment of the present invention will now be described.

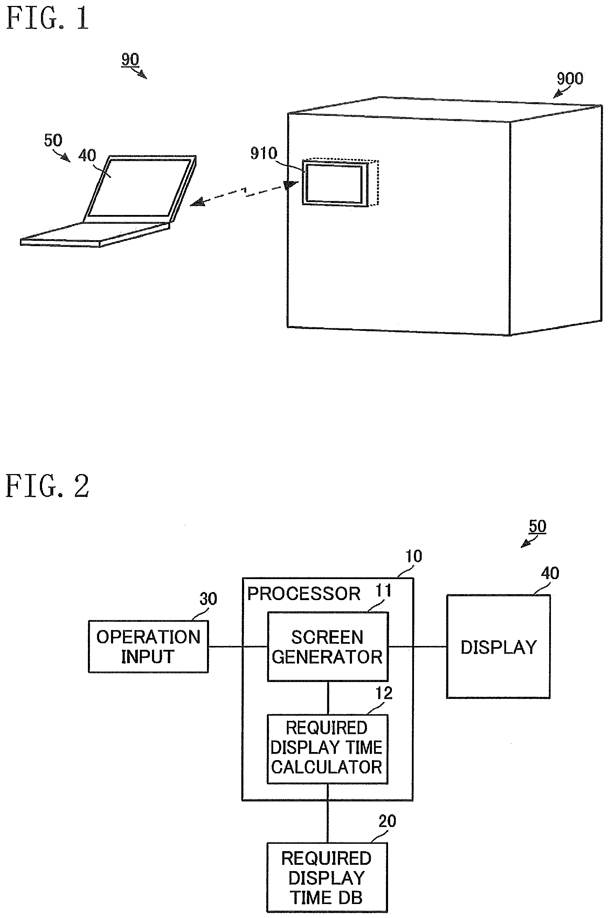

FIG. 1 is a schematic block diagram of an FA system, to which the display screen generating device according to the first embodiment is applied. FIG. 2 is a block diagram illustrating a main configuration of the display screen generating device according to the embodiment.
As shown in FIG. 1, an FA system 90 includes a display screen generating device 50 and an FA device 900. The display screen generating device 50 is a personal computer, for example, which includes a display 40. The FA device 900 includes a programmable terminal 910. This programmable terminal 910 corresponds to the "external device" in the present invention. Communications are possible between the display screen generating device 50 and the programmable terminal 910.
The display screen generating device 50 generates a screen for the programmable terminal 910. The display screen generating device 50 transfers a completed screen to the programmable terminal 910. The programmable terminal 910 displays the screen generated by the display screen generating device 50. That is, the screen displayed on the programmable terminal 910 is generated by the display screen generating device 50, which is different from the programmable terminal 910. In this case, as described above as the objective, the time required to display the screen on the display screen generating device 50 would differ from the time required to display the screen on the programmable terminal 910.

This difference is recognized by a screen designer using the display screen generating device 50 with the following configuration.
As shown in FIG. 2, the display screen generating device 50 includes a processor 10, a required display time database (DB) 20, an operation input 30, and the display 40.
The processor 10 includes a screen generator 11 and a required display time calculator 12. The processor 10 may be, for example, composed of a processing unit such as a CPU and programs. The programs include a screen generating program and a required display time calculating program. The processing unit executes the screen generating program to provide the screen generator 11. The processing unit executes the required display time calculating program to provide the required display time calculator 12. The screen generator 11 and the required display time calculator 12 may be hardware devices independent from each other.
Although a detailed screen generating method will be described later, the screen generator 11 generates a screen to be displayed on the programmable terminal 910.
The operation input 30 receives a request for screen generation, and outputs the received request to the screen generator 11. The screen generator 11 generates a screen based on the input request.
The required display time calculator 12 calculates the time required to display the screen generated by the screen generator 11 (i.e., a required screen display time) on the programmable terminal 910. At this time, the required display time calculator 12 calculates the required screen display time based on required display times per component stored in the required display time DB 20.

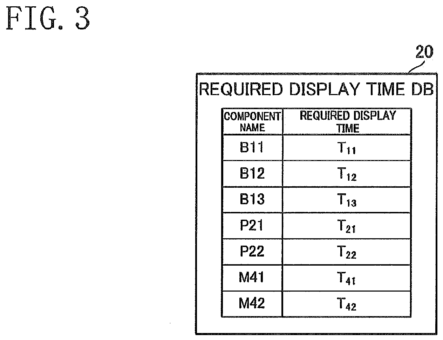

FIG. 3 illustrates exemplary contents stored in the required display time DB. As shown in FIG. 3, the required display time DB 20 stores times required to display components (i.e., required times per component). Each of the required display times is the time required to display one of the components on the programmable terminal 910. The required display times per component may be measured in advance on the component-by-component basis using the programmable terminal 910.
Specifically, the required display time DB 20 stores component names in association with required display times. For example, as shown in FIG. 3, a component name B11 is associated with a required display time T₁₁. A component name B12 is associated with a required display time T₁₂. A component name B13 is associated with a required display time T₁₃. A component name P21 is associated with a required display time T₂₁. A component name P22 is associated with a required display time T₂₂. A component name M41 is associated with a required display time T₄₁. A component name M42 is associated with a required display time T₄₂.

Upon receipt of the names of the components used for a screen from the screen generator 11, the required display time calculator 12 refers to the required display time DB 20 to obtain required display times associated with the received component names. The required display time calculator 12 adds up the required display times of all the components used for the screen to calculate a required screen display time TD.
This required screen display time TD allows the screen designer to recognize the time required to display the screen on the programmable terminal 910. This required screen display time TD also allows the screen designer to recognize that displaying a predetermined screen on the programmable terminal 910 requires a time longer than or equal to a predetermined time.
In the above description, the required screen display time TD is the period from the time when nothing is displayed to the start of displaying a screen. If screens are switched, the time for switching from a previous screen to a next screen, that is, the time required for display transition is substantially the same as the required screen display time TD. The time required for display transition may be treated similarly to the following required screen display time TD.
Now, a specific screen generating method, as well as how to inform the designer of the required screen display time TD and how to raise an alert will be described.

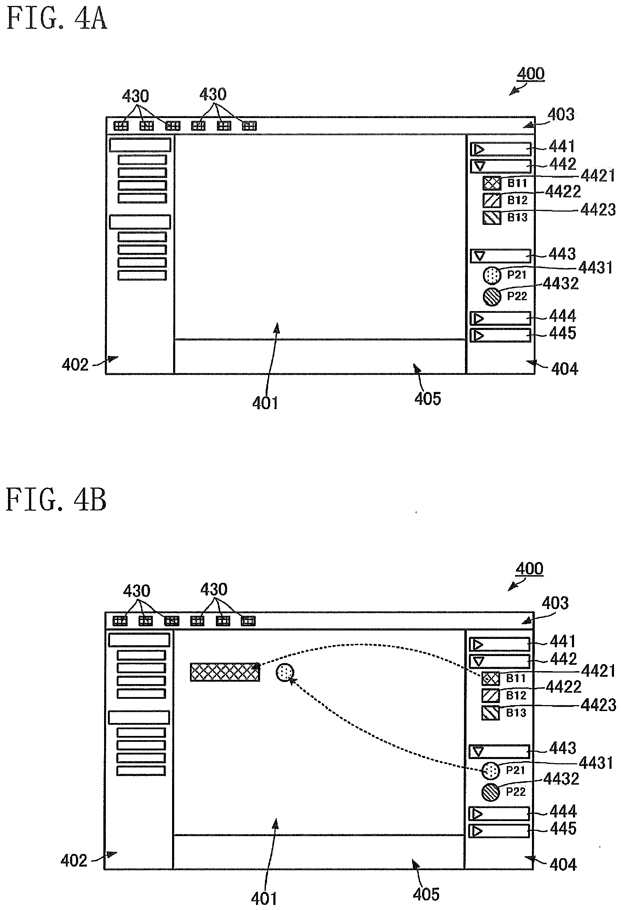

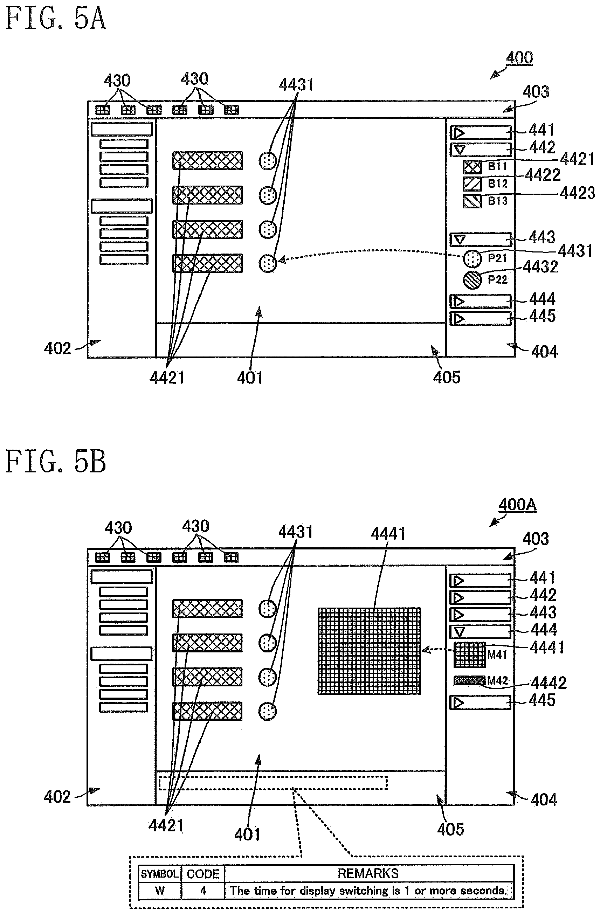

FIG. 4A illustrates a schematic configuration of a display screen for screen generation. FIG. 4B illustrates a first state of the screen generation. FIG. 5A illustrates a second state of the screen generation. FIG. 5B illustrates a third state of the screen generation.

A screen 400 used for generating a screen in the screen generator 11 is displayed on the display 40 of the display screen generating device 50. As shown in FIG. 4A, the screen 400 includes a window 401 for screen generation, an explorer window 402, a tool bar 403, a toolbox window 404, and a build window 405. The window 401 for screen generation displays a screen to be generated, that is, the screen to be displayed on the programmable terminal 910. The explorer window 402 includes settings of screens and selection bars for a selecting screen, for example. The tool bar 403 includes icons 430 for executing functions which are often used in screen generation. The build window 405 displays, for example, an error message at the completion of building, that is, in generating a file to be transferred to the programmable terminal 910. In the file, the icons of the screen generated in the window 401 for screen generation are linked to respective functions.
The toolbox window 404 includes bars 441, 442, 443, 444, and 445, which are elements (e.g., buttons, lamps, and meters) constituting a screen and classified according to type. The toolbox window 404 also includes elements and their icons in association with the bars. A component name is attached to each element. For example, the button bar 442 includes button icons 4421, 4422, and 4423. The component name B11 is attached to the icon 4421. The component name B12 is attached to the icon 4422. The component name B13 is attached to the icon 4423. The lamp bar 443 includes lamp icons 4431 and 4432. The component name P21 is attached to the icon 4431. The component name P22 is attached to the icon 4432. The meter bar 444 includes meter icons 4441 and 4442. The component name M41 is attached to the icon 4441. The component name M42 is attached to the icon 4442.

The icons of the toolbox window 404 are dragged and dropped by operation through the operation input 30. For example, as shown in FIG. 4B, the icon 4421 is selected and placed in a predetermined position of the window 401 for screen generation. A screen is then generated, which includes the icon 4421 of B11 in the predetermined position. Similarly, as shown in FIG. 4B, the icon 4431 is selected and placed in another predetermined position of the window 401 for screen generation. A screen is then generated, which includes the icon 4431 of P21 in the other predetermined position.
In this configuration, assume that the icon 4421 is placed in the window 401 for screen generation by the screen generator 11, as shown in FIG. 4B. Then, the required display time calculator 12 detects the component name B11 from the icon 4421, and obtains the required display time T₁₁ associated with the component name B11 from the required display time DB 20. Similarly, assume that the icon 4431 is placed in the window 401 for screen generation by the screen generator 11, as shown in FIG. 4B. Then, the required display time calculator 12 detects the component name P21 from the icon 4431, and obtains the required display time T₂₁ associated with the component name P21 from the required display time DB 20.
The required display time calculator 12 adds up the required display time T₁₁ of the icon 4421 and the required display time T₂₁ of the icon 4431 to calculate the required screen display time TD.

This calculation of the required screen display time TD continues until completion of screen generation in the window 401 for screen generation. At each time when the number of icons placed in the window 401 for screen generation changes, the required screen display time TD is updated.
For example, after transition from the state shown in FIG. 4B to the state shown in FIG. 5A, in which four icons 4421 and four icons 4431 are placed in the window 401 for screen generation. The required display time calculator 12 adds up the required display times of the four icons 4421 (i.e., 4 × T₁₁) and the required display times of the four icons 4431 (i.e., 4 × T₂₁) to calculate and update the required screen display time TD.

Furthermore, after transition from the state shown in FIG. 5A to the state shown in FIG. 5B, in which four icons 4421, four icons 4431, and a single icon 4441 are placed in the window 401 for screen generation. The required display time calculator 12 adds up the required display times of the four icons 4421 (i.e., 4 × T₁₁), the required display times of the four icons 4431 (i.e., 4 × T₂₁), and the required display time of the single icon 4441 (i.e., T₄₁) to calculate and update the required screen display time TD.

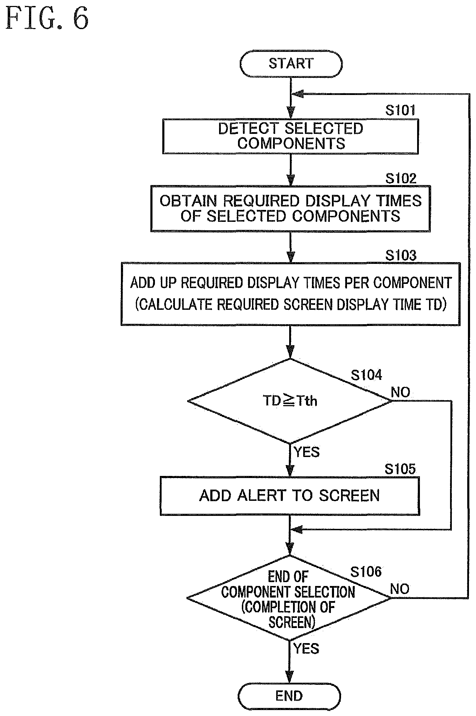

In the state of FIG. 5B, the required screen display time TD is longer than or equal to a predetermined threshold time Tth (e.g., 1 second in FIG. 5B). The required display time calculator 12 detects that the required screen display time TD is longer than or equal to the threshold time Tth, and allows the build window 405 to display that the required screen display time TD is longer than or equal to the threshold time Tth. For example, in FIG. 5B, the build window 405 displays an alert symbol "W," an identification code "4," and remarks "[t]he time for display switching is 1 or more seconds." This allows the screen designer to recognize on the screen 400 that a time longer than or equal to the threshold time Tth is required to display the screen in progress on the programmable terminal 910.
This processing is implemented by programming the flow shown in FIG. 6 and executing the program using the processor 10. FIG. 6 is a flow chart illustrating a display screen generating method according to the first embodiment of the present invention.
First, the processor 10 detects components selected for generating a screen (S101). Specifically, the processor 10 detects the components placed in the window 401 for screen generation.
The processor 10 obtains required display times of the selected components from the required display time DB 20 (S102). The processor 10 adds up the required display times per component to calculate the required screen display time TD (S103).
The processor 10 compares the required screen display time TD with the threshold time Tth. The threshold time Tth is a predetermined time until the screen is displayed on the programmable terminal 910. The threshold time Tth is the shortest display time until the operator of the programmable terminal 910 starts to feel late. Upon detecting that the required screen display time TD is longer than or equal to the threshold time Tth (YES in S104), the processor 10 adds an alert to the screen (S105). Specifically, the processor 10 displays the alert in the build window 405 of the screen 400.

Upon detecting that the required screen display time TD is shorter than the threshold time Tth (NO in S104), the processor 10 does not raise the alert.

If the selection of components is not ended (NO in S106), the process returns to the step S101 so that the processor 10 continues screen generation. Upon detecting that the selection of components is ended (i.e., the screen is completed) (YES in S106), the processor 10 performs building and stores a file to be transferred to the programmable terminal 910. At this time, since building is performed based on the configuration of the window 401 for screen generation, the file does not necessarily include any alert.
A display screen generating device, a display screen generating method, and a display screen generating program according to a second embodiment of the present invention will now be described.

The display screen generating device, the display screen generating method, and the display screen generating program of this embodiment differ from those of the first embodiment in how to notify the required screen display time TD. In other respects, the display screen generating device, the display screen generating method, and the display screen generating program of this embodiment are the same as those of the first embodiment. Repetitive explanation will be omitted.

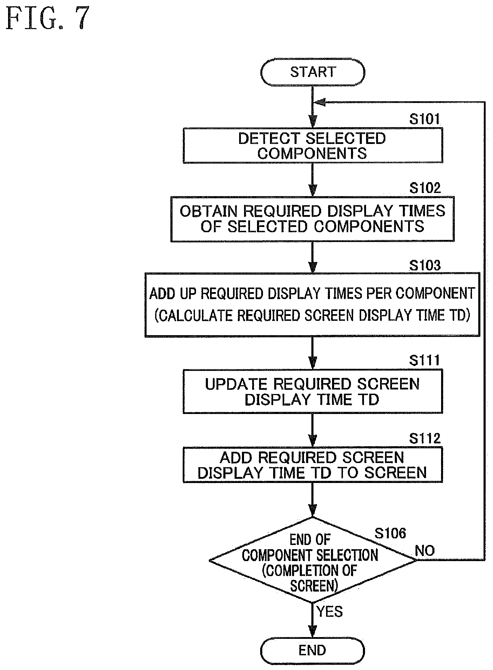

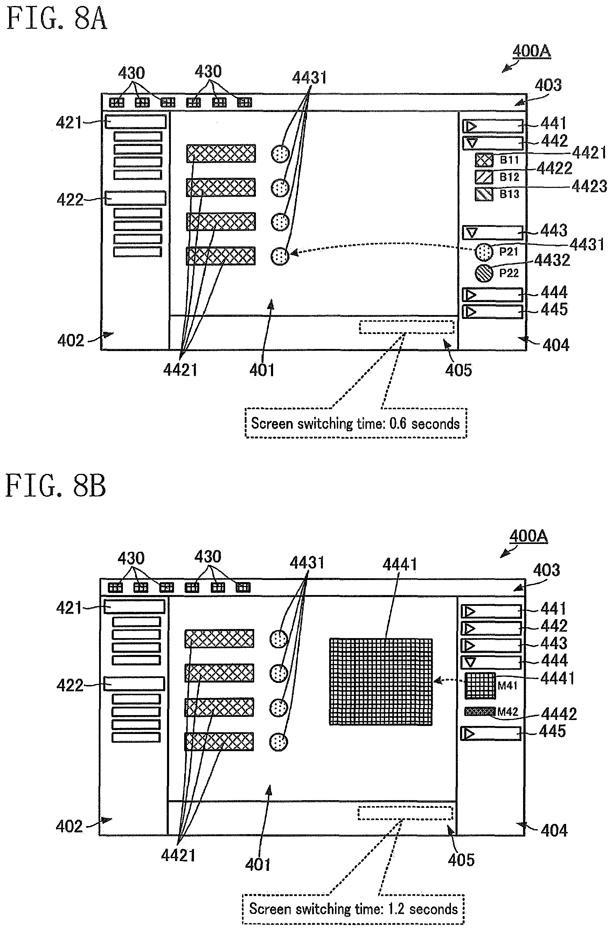

FIG. 7 is a flow chart illustrating the display screen generating method according to the second embodiment of the present invention. FIG. 8A illustrates a first state of screen generation in the display screen generating method according to the second embodiment. FIG. 8B illustrates a second state of the screen generation in the display screen generating method according to the second embodiment.
Steps S101 to S103 of FIG. 7 are identical to the steps S101 to S103 of FIG. 6, and explanation thereof is thus omitted.
The processor 10 stores the required screen display time TD. When a new required screen display time TD is calculated, the processor 10 updates the storage (S111).

The processor 10 adds the updated required screen display time TD to the screen (S112). Specifically, the processor 10 displays the updated required screen display time TD in the build window 405 of the screen 400.
In FIG. 8A, when four icons 4421 and four icons 4431 are placed in the window 401 for screen generation, the processor 10 add up the required display times of the four icons 4421 (i.e., 4 × T₁₁) and the required display times of the four icons 4431 (i.e., 4 × T₂₁), and updates the required screen display time TD with this sum. The processor 10 displays this updated required screen display time TD in the build window 405. For example, in FIG. 8A, the build window 405 displays "[s]creen switching time: 0.6 seconds." The screen switching time is defined under the same standard as the required screen display time TD.
In FIG. 8B, a single icon 4441 is added to the window 401 for screen generation of FIG. 8A. The processor 10 adds up the required display times of the four icons 4421 (i.e., 4 × T₁₁), the required display times of the four icons 4431 (i.e., 4 × T₂₁), and the required display time of the single icon 4441 (i.e., T₄₁), and updates the required screen display time TD with this sum. The processor 10 displays this updated required screen display time TD in the build window 405. For example, in FIG. 8B, the build window 405 displays "[s]creen switching time: 1.2 seconds."
This processing allows the screen designer to sequentially check the required screen display time TD while generating a screen by adding components, for example. As in the embodiment described above, since building is performed based on the configuration of the window 401 for screen generation, the file does not necessarily include any required screen display time TD.

A display screen generating device, a display screen generating method, and a display screen generating program according to a third embodiment will now be described.

The display screen generating device, the display screen generating method, and the display screen generating program of this embodiment differ from those of the first and second embodiments in adding information on required display times per group to the screen. In other respects, the display screen generating device, the display screen generating method, and the display screen generating program of this embodiment are the same as those of the first and second embodiments. Repetitive explanation will be omitted.

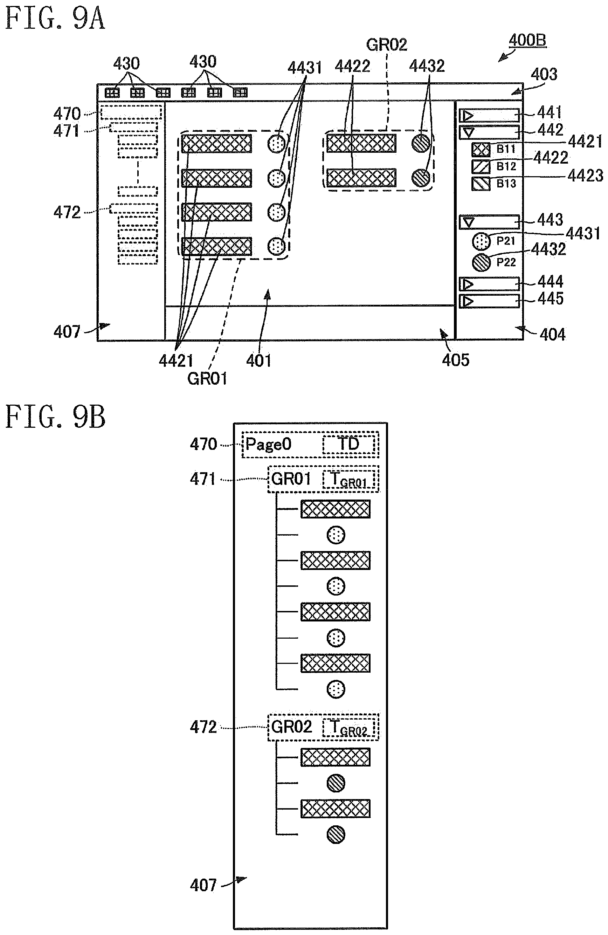

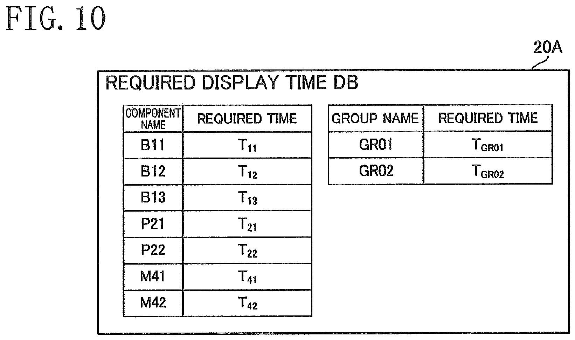

FIG. 9A illustrates a schematic configuration of a display screen for screen generation. FIG. 9B illustrates a configuration of a group structure indication window. FIG. 10 illustrates exemplary contents stored in the required display time DB according to the third embodiment.
As shown in FIG. 9A, a screen 400B includes a window 401 for screen generation, a tool bar 403, a toolbox window 404, a build window 405, and a group structure indication window 407.
As shown in FIG. 9B, the group structure indication window 407 includes a page indication bar 470 and group indication bars 471 and 472. The page indication bar 470 indicates the page corresponding to the screen displayed in the window 401 for screen generation.
The page indication bar 470 indicates the page number and the required screen display time TD of the screen displayed in the window 401 for screen generation.

The group indication bar 471 indicates a required display time T_{GR01} for a group GR01. The icons constituting the group GR01 (four icons 4421 and four icons 4431 in the example of FIG. 9A) are indicated in association with the group indication bar 471. The required display time T_{GR01} for the group GR01 is calculated from the sum of the required display times for the icons constituting the group GR01. As shown in FIG. 10, the required display time T_{GR01} is stored in a required display time DB 20A in association with the group name.
The group indication bar 472 indicates a required display time T_{GR02} for a group GR02. The icons constituting the group GR02 (two icons 4422 and two icons 4432 in the example of FIG. 9A) are indicated in association with the group indication bar 472. The required display time T_{GR02} for the group GR02 is calculated from the sum of the required display times for the icons constituting the group GR02. As shown in FIG. 10, the required display time T_{GR02} is stored in the required display time DB 20A in association with the group name.

Like the other components, the group indication bars 471 and 472 are dragged and dropped to be placed in the window 401 for screen generation. In this case, the required display time calculator 12 obtains the required display times of the groups GR placed in the window 401 for screen generation from the required display time DB 20A to calculate the required screen display time TD.

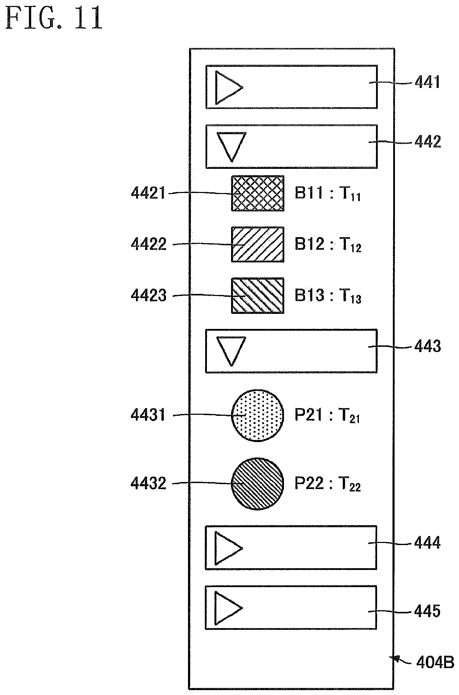

This configuration enables calculation of the required screen display time TD in generating a screen using a group GR, without obtaining the required display times for the components of the group GR individually. This configuration also allows the screen designer to easily check the required display time of each group GR (i.e., on the group-by-group basis).
As shown in FIG. 11, a toolbox window may display the required display time on the component-by-component basis. FIG. 11 illustrates a schematic configuration of a toolbox window.
As shown in FIG. 11, a toolbox window 404A displays the required display time for per component together with its component name. This configuration allows the screen designer to easily check the required display time of each component.

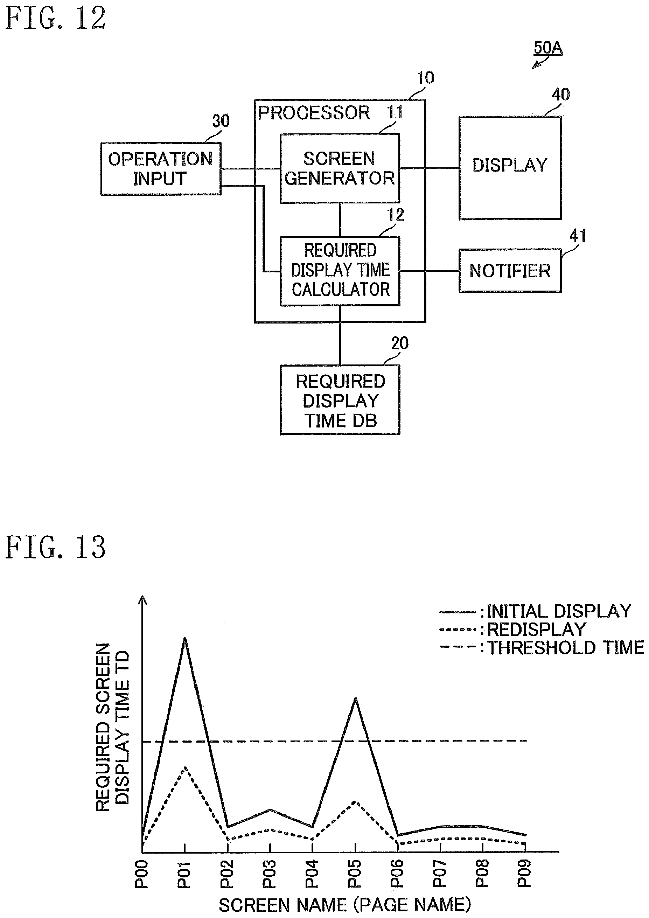

A display screen generating device, a display screen generating method, and a display screen generating program according to a fourth embodiment of the present invention will now be described. FIG. 12 is a block diagram illustrating a main configuration of the display screen generating device according to the fourth embodiment of the present invention.
The display screen generating device, the display screen generating method, and the display screen generating program of this embodiment differ from those of the first, second, and third embodiments in adding a notifier (notification). In other respects, the display screen generating device, the display screen generating method, and the display screen generating program of this embodiment are the same as those of the first, second, and third embodiments. Repetitive explanation will be omitted. Only the configuration of the device will be described, and explanation of the method and the program will be omitted, which merely belong to different categories.
A display screen generating device 50A includes a notifier 41 in addition to the configuration of the display screen generating device 50.
The required display time calculator 12 stores required screen display times TD for screens generated by the screen generator 11. The required display time calculator 12 outputs the required screen display times TD for the screens to the notifier 41 upon receipt of a request to output the required screen display times TD for the screens from the operation input 30.
The notifier 41 generates a file including a list of the required screen display times TD for the screens based on the required screen display times TD. FIG. 13 is a graph illustrating an exemplary file including a list of required screen display times TD per screen generated by a notifier. In FIG. 13, the horizontal axis represents screen names (i.e., page names), and the vertical axis represents the required screen display times TD. The solid line represents the initial required screen display times TD, the dotted line represents the required screen display times TD at the time of redisplay, and the broken line represents the threshold time.

Outputting the file represented by this graph allows the screen designer to easily check the required screen display times TD per screen in view of the graph. As shown in FIG. 13, the threshold time is displayed, thereby allowing the screen designer to easily check the screen which requires time over the threshold time. The screen designer can also easily check the required screen display times TD per screen at the time of redisplay.

The required screen display times at the time of redisplay and the threshold time can be omitted. The required screen display times at the time of redisplay can be calculated by obtaining required display times per component at the time of redisplay in advance by the same method as the initial required screen display times TD.

If the notifier 41 is a sound-emitting device such as a speaker, an alert can be raised with sound. A display screen generating device, a display screen generating method, and a display screen generating program according to a fifth embodiment of the present invention will now be described.
The display screen generating device, the display screen generating method, and the display screen generating program of this embodiment differ from those of the first, second, and third embodiments in simulating display of a generated screen. In other respects, the display screen generating device, the display screen generating method, and the display screen generating program of this embodiment are the same as those of the first, second, and third embodiments. Repetitive explanation will be omitted.

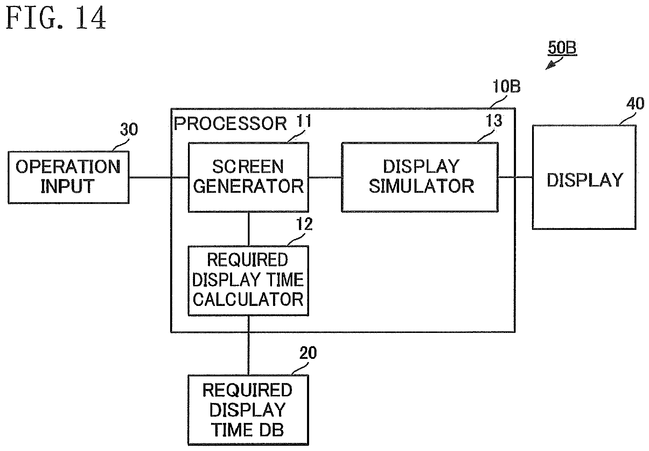

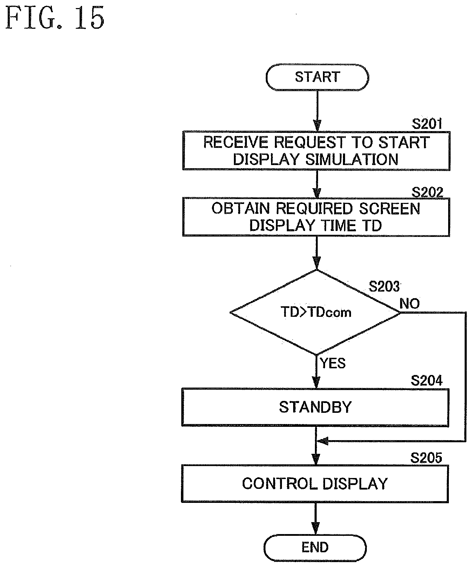

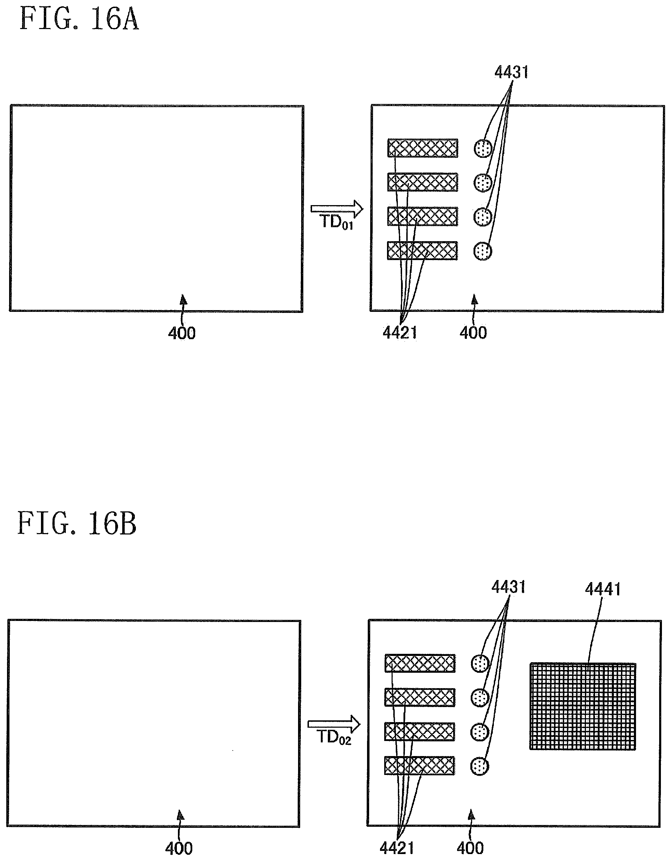

FIG. 14 is a block diagram of a display screen generating device according to a fifth embodiment of the present invention. FIG. 15 is a flow chart of checking a generated screen using a simulator according to the fifth embodiment. FIGS. 16A and 16B illustrate how to display a screen on a display. The screen completed in the window 401 for screen generation in FIG. 16A includes different components from that in FIG. 16B.
As shown in FIG. 14, a processor 10B of a display screen generating device 50B includes a display simulator 13 in addition to the configuration of the processor 10 of the above embodiments. The display simulator 13 is connected to the screen generator 11 and the display 40. The display simulator 13 executes the following processing.
The processor 10B receives a request to start display simulation via an operation input 30 (S201). The processor 10B obtains the required screen display time TD for a screen stored in the required display time calculator 12 (S202).
The processor 10B compares the required screen display time TD (i.e., the required screen display time on the programmable terminal 910) with the required screen display time TD_{com} on the display screen generating device. If the required screen display time TD is longer than the required screen display time TD_{com} (YES in S203), the processor 10B executes the steps S204 and S205 sequentially. Specifically, the display simulator 13 of the processor 10B stands by for the required screen display time TD (S204), and controls the display 40 to display a screen (S205). At this time, the standby time is exactly the same as the time obtained by subtracting the required screen display time TD_{com} from the required screen display time TD.
On the other hand, if the required screen display time TD is shorter than or equal to the required screen display time TD_{com} (NO in S203), the processor 10B does not provide any standby time and the display simulator 13 allows the display 40 to display the screen.
For example, the example of FIGS. 16A and 16B show that required screen display times TD₀₁ and TD₀₂ are longer than the required screen display time TD_{com}. In FIG. 16A, first, nothing is displayed on the screen 400 of the display 40. From this state, the display simulator 13 allows the screen 400 of the display 40 to display a screen after a standby time of the required screen display time TD₀₁. In FIG. 16B, first nothing is displayed on the screen 400 of the display 40. From this state, the display simulator 13 allows the screen 400 of the display 40 to display a screen after a standby time of the required screen display time TD₀₂.
This processing allows the screen designer to easily recognize how an actual screen is displayed on the programmable terminal 910.
In this simulation, if a plurality of screens exist, the standby for the required screen display time TD described above may provided in screen switching. This allows the screen designer to easily recognize how a screen switched to is displayed.
In the above embodiments, an example has been described where the programmable terminal 910 is an external device for the display screen generating device. The configuration described above is applicable to any other device including a display to provide similar advantages.

## Claims

1. A display screen generating device comprising:
a screen generator configured to generate a screen to be displayed on an external device;
a required display time database configured to store required times per component, each being required to display one of components used for the screen on the external device; and
a required display time calculator configured to calculate a required screen display time required to display the generated screen on the external device based on the required times per component.

2. The display screen generating device of claim 1, **characterized in that** the screen generator adds information on the required screen display time to the screen.

3. The display screen generating device of claim 2, **characterized in that** the required display time calculator outputs an alert to the screen generator upon detecting that the required screen display time is longer than or equal to a predetermined threshold time, and the screen generator adds the alert to the screen.

4. The display screen generating device of claim 1 or 2, **characterized in that** the required display time calculator raises an alert upon detecting that the required screen display time is longer than or equal to a predetermined threshold time.

5. The display screen generating device of any one of claims 1 to 4, **characterized in that**
the required display time database stores required times per group required to display groups, each including some of components, on the external device, and
in using one(s) of the groups for the screen, the required display time calculator calculates the required screen display time based on associated one(s) of the required times per group.

6. The display screen generating device of any one of claims 1 to 5, **characterized in that** the screen generator adds information on the required times per group to the screen.

7. The display screen generating device of any one of claims 1 to 6, **characterized in that** the screen generator adds information on the required times per component to the screen.

8. The display screen generating device of any one of claims 1 to 7, **characterized in that** the required display time calculator stores required screen display times per screen, and outputs a list of the required screen display times per screen.

9. The display screen generating device of any one of claims 1 to 8, further comprising:
a display simulator configured to simulate display of the screen, **characterized in that**
the display simulator outputs the screen after a standby time corresponding to the required screen display time.

10. A display screen generating method comprising:
generating a screen to be displayed on an external device; and
calculating a required screen display time required to display the generated screen on the external device based on required times per component, each being required to display one of components used for the screen on the external device.

11. A display screen generating program allowing an information processor to execute:
generating a screen to be displayed on an external device; and
calculating a required screen display time required to display the generated screen on the external device based on required times per component, each being required to display one of components used for the screen on the external device.
